# EUROPÄISCHE PATENTANMELDUNG

(11) **EP 4 389 982 A1**
(43) Veröffentlichungstag der Anmeldung: **26.06.2024**
(21) Anmeldenummer: 23214917.9
(22) Anmeldetag: 07.12.2023
(51) Int. Cl.: E01C 23/088, H04W 4/20

(54) **VERFAHREN ZUM BETREIBEN EINER BODENFRÄSMASCHINE SOWIE BODENFRÄSMASCHINE**

(30) Priorität: 22.12.2022 DE 102022214298
(71) Anmelder: BOMAG GmbH, 56154 Boppard (DE)
(72) Erfinder: Dupont, Alice, 56154 Boppard (DE); Schomaker, Rafael, 56154 Boppard (DE); Werner, Martin, 56154 Boppard (DE)
(74) Vertreter: Zimmermann & Partner Patentanwälte mbB

(57) **Zusammenfassung**

Die vorliegende Erfindung betrifft ein Verfahren zum Betreiben einer Bodenfräsmaschine sowie eine Bodenfräsmaschine.

## Beschreibung

Die Erfindung betrifft ein Verfahren zum Betreiben einer Bodenfräsmaschine, insbesondere einer Straßenfräse, eines Recyclers, eines Stabilisierers oder dergleichen. Die Erfindung betrifft ferner eine Bodenfräsmaschine, die zum Durchführen des erfindungsgemäßen Verfahrens ausgebildet ist.

Gattungsgemäße Bodenfräsmaschinen werden bekannterweise im Straßen- und Wegebau zur Sanierung von Straßenbelägen oder aber auch zur Neuverlegung und Anfertigung von Straßen, Wegen oder Pisten eingesetzt. Die Bodenfräsmaschinen befinden sich dabei während ihres Einsatzes entweder bereits am Einsatzort oder aber sie werden mit Hilfe eines Transportfahrzeugs, welches in der Regel mit einem Anhänger, häufig einem Tieflader, ausgerüstet ist, vor dem Arbeitsbeginn zu dem Einsatzort transportiert und dort abgesetzt. Bevor die Bodenfräsmaschine ihren Fräsbetrieb aufnimmt, sind üblicherweise Wartungs- und Inspektionsarbeiten an der Bodenfräsmaschine vorzunehmen. Ferner lassen sich solche Maschinen häufig nicht von jetzt auf gleich starten, da beispielsweise interne Computereinrichtungen und/oder Anzeigebildschirme und/oder weitere Einrichtungen erst hochgefahren bzw. für den tatsächlichen Arbeitseinsatz vorbereitet werden müssen. Um die Maschine starten zu können, muss der Bediener üblicherweise vom Bodenuntergrund aus auf den Fahrstand der Maschine aufsteigen, beispielsweise über eine Leiter, um von dort die Maschine in Betrieb nehmen zu können. Insbesondere nachts oder frühmorgens lassen sich Wartungsarbeiten an der Bodenfräsmaschine aufgrund der schlechten Lichtverhältnisse nur mit erhöhtem Aufwand vornehmen. Häufig ist zur Aktivierung einer von der Bodenfräsmaschine mit elektrischer Energie versorgten Lichtquelle zunächst eine Aktivierung einer Zündschaltung der Bodenfräsmaschine vom Fahrstand aus erforderlich.

Für Bodenfräsmaschinen dieser Art ist es bekannt, einen Bordnetztrennschalter vorzusehen. Ist dieser in seiner Trennposition, ist ein elektrisches Bordnetz der Bodenfräsmaschine spannungsfrei bzw. ein Energiespeicher für elektrische Energie, beispielsweise eine Batterie, der Bodenfräsmaschine ist vom Bordnetz abgeklemmt. Das Bordnetz bezeichnet dabei eine Gesamtheit, beispielweise umfassend Kabelleitungen, ein oder mehrere Steuergeräte, ein oder mehrere Sensoren, eine oder mehrere Kontrollbeleuchtungen, vom Bordnetz mit elektrischer Energie versorgte Aktoren etc. Die Aufgabe eines solchen Bordnetztrennschalters ist einerseits sicherheitstechnische Art, um beispielsweise in Notsituationen und/oder bei einem Transport der Bodenfräsmaschine die Maschine zumindest zu wesentlichen Teilen spannungsfrei schalten zu können. Andererseits soll bei längeren Standzeiten einer Entleerung des Energiespeichers durch Dauerverbraucher vorgebeugt werden. Ergänzend zu dem Bordnetz können Einzelkomponenten vorhanden sein, die unabhängig vom Bordnetz mit elektrischer Energie, beispielsweise aus dem Energiespeicher für elektrische Energie und/oder einem separaten Energiespeicher für elektrische Energie, versorgbar sind. Diese werden bei einer Aktivierung des Bordnetztrennschalters somit nicht von dem jeweiligen Energiespeicher getrennt. Solche Komponenten können beispielsweise eine GPS-Sender-Empfänger-Einheit zur Maschinenortung oder auch einer Beendigung des Maschinenbetriebs, d.h. insbesondere einem Abschalten des Primärantriebsaggregates, nachlaufende Verbraucher sein, wie beispielsweise ein herunterzufahrendes Motorsteuergerät und/oder eine Abgas-Nachbehandlungseinrichtung sein. Für diese nachlaufenden Verbraucher ist es bekannt, diese mit eigenen Abschaltmechanismen, welche diese Verbraucher herunterfahren und abschalten, zu versehen. Mit Ausnahme dieser gegebenenfalls vorhandenen Dauerverbraucher und/oder nachlaufenden Komponenten bleiben Betätigungen jeglicher über diesen Bordnetztrennschalter hinausgehender Betätigungselemente im Regelfall damit ohne Folgen und/oder Wirkungen. Eine Inbetriebnahme der Bodenfräsmaschine ist bei aktiviertem Bordnetztrennschalter nicht möglich. Dafür ist wenigstens eine noch herzustellende Verbindung des Energiespeichers für elektrische Energie durch eine Deaktivierung des Bordnetztrennschalters erforderlich. Dieser Zustand mit aktiviertem Bordnetztrennschalter wird vorliegend als Aus-Zustand bezeichnet. Umfasst die Bodenfräsmaschine beispielsweise eine über die vorstehend genannte GPS-Sender-Empfänger-Einheit zur Maschinenortung hinausgehende und über das Bordnetz mit elektrischer Energie versorgte Sende- und/oder Empfangseinheit zum Empfangen und/oder Senden von Daten und/oder Signalen, beispielsweise zu Identifikationszwecken, zur Abfrage von Maschinenparameter, zum Empfangen von Bearbeitungsdaten etc., ist auch diese im Aus-Zustand deaktiviert und kann somit weder Daten und/oder Signale empfangen noch senden. Das Gleiche gilt für alle weiteren ausschließlich über das Bordnetz mit elektrischer Energie vorsorgte Verbraucher.

Für gattungsgemäße Bodenfräsmaschinen ist ferner ein Ein-Zustand bekannt. Dieser liegt in der Regel dann vor, wenn der Bordnetztrennschalter in seiner deaktivierten Spannungsfreigabeposition ist und somit beispielsweise der elektrische Energiespeicher mit dem Bordnetz derart verbunden ist, dass er in stromleitender Verbindung mit dem Bordnetz steht und beispielsweise ein oder mehrere elektrische Energie verbrauchende Einheiten der Bodenfräsmaschine mit elektrischer Energie versorgt. Im Ein-Zustand ist die Bodenfräsmaschine einsatzbereit. Ein gegebenenfalls vorhandenes Primärantriebsaggregat, beispielsweise ein Verbrennungsmotor, ist somit aktiv und erzeugt für den Betrieb der Bodenfräsmaschine erforderliche Antriebsenergie.

Für Bodenfräsmaschinen ist ferner auch bereits ein Sleep-Zustand bekannt, bei dem der Bordnetztrennschalter zwar bereits in seiner deaktivierten Spannungsfreigabeposition ist und damit Einzelfunktionen der Bodenfräsmaschine bereits durchgeführt werden können, wie beispielsweise das Einschalten von Licht , das Primärantriebsaggregat und andere, für den tatsächlichen Fahr- und Fräsbetrieb erforderliche Komponenten allerdings noch inaktiv sind. Um die Bodenfräsmaschine vom Sleep-Zustand in den Ein-Zustand zu versetzen, ist es bekannt, dies an ein Starten des Primärantriebsaggregates zu knüpfen.

Der Übergang vom Sleep-Zustand in den Ein-Zustand kann allerdings ein vergleichsweise langes Zeitintervall erfordern, weil beispielsweise im Sleep-Zustand noch inaktiv und für den Ein-Zustand allerdings erforderliche Komponenten noch einsatzbereit gemacht werden müssen. Dieses Zeitintervall wird von den Bedienern dieser Bodenfräsmaschinen häufig als störend empfunden.

Hiervon ausgehend liegt der Erfindung die Aufgabe zugrunde, ein Verfahren zum Betreiben einer Bodenfräsmaschine bereitzustellen, welche einen erhöhten Bedienkomfort für einen Bediener bei der Inbetriebnahme der Bodenfräsmaschine zur Verfügung stellt.

Diese Aufgabe wird erfindungsgemäß jeweils durch ein Verfahren sowie durch eine Bodenfräsmaschine gemäß den unabhängigen Ansprüchen gelöst. Vorteilhafte Weiterbildungen sind in den abhängigen Ansprüchen angegeben.

Die für die Durchführung des erfindungsgemäßen Verfahrens vorgesehene Bodenfräsmaschine umfasst einen Fahrstand, ein Primärantriebsaggregat, insbesondere einen Verbrennungsmotor, das die für den Fräsbetrieb der Bodenfräsmaschine erforderliche Antriebsenergie zur Verfügung stellt, und eine Speichereinheit für elektrische Energie, welche unabhängig von dem Primärantriebsaggregat elektrische Energie für wenigstens eine aus einer Vielzahl von elektrischen oder elektrisch betätigbaren Komponenten der Bodenfräsmaschine zur Verfügung stellen kann, insbesondere ein an ein Bordnetz der Bodenfräsmaschine angeschlossener und von dieser mitgeführter Akkumulator. Die elektrischen oder elektrisch betätigbaren Komponenten können zum Durchführen verschiedener Maschinenfunktionen vorgesehen sein und dazu beispielsweise Schalter und/oder Ventile für eine oder mehrere Hydraulikpumpen, Stellmotoren, Lichtquellen, Anzeigeeinrichtungen, wie Anzeigebildschirme, etc umfassen. Die Bodenfräsmaschine umfasst ferner ein Hauptbedienpult mit wenigstens einer Anzeige- und Steuervorrichtung zur Eingabe von Steuerbefehlen für die Steuerung der Bodenfräsmaschine. Bodenfräsmaschinen dieser Art sind häufig vergleichsweise große und schwere Maschinen. Es kann daher vorgesehen sein, dass ergänzend wenigstens eine außerhalb des Fahrstandes angeordnete Nebenbedieneinheit vorhanden ist, über welche wenigstens eine der elektrischen oder elektrisch betätigbaren Komponenten betätigbar ist. Diese Nebenbedieneinheit kann insbesondere von außerhalb der Bodenfräsmaschine von einer auf dem Bodenuntergrund aufstehenden Person bedient werden. Es ist bekannt, dass bei Bodenfräsmaschinen über eine solche Nebenbedieneinheit im laufenden Fräsbetrieb durch Hilfspersonal Eingaben zur Steuerung der Bodenfräsmaschine vorgenommen werden können, beispielsweise zur Steuerung einer eine Fahreinrichtung mit einem Maschinenrahmen verbindenden Hubeinrichtung etc.

Teil der Bodenfräsmaschine ist ferner eine zentrale elektronische Steuervorrichtung, beispielsweise eine Computereinrichtung, zur Steuerung einer, mehrerer oder aller der elektrischen und/oder elektrisch betätigbaren Komponenten. Diese Computereinrichtung kann mit einem oder mehreren Sensoren zur Erfassung verschiedener Betriebszustände in Signalverbindung stehen, um beispielsweise im laufenden Fräsprozess Zustandsdaten über Betriebszustände einzelner Komponenten der Bodenfräsmaschine empfangen zu können. Die Steuervorrichtung steuert ferner den Betrieb von Komponenten der Bodenfräsmaschine, indem sie Steuereingaben, beispielsweise durch den Bediener, empfängt und Komponenten der Bodenfräsmaschine ansteuert.

Für das erfindungsgemäße Verfahren ist es nun vorgesehen, dass ein Versetzen der Bodenfräsmaschine von einem Aus-Zustand in einen Sleep-Zustand, anschließend von einem Sleep-Zustand in einen Wake-up-Zustand und weiter anschließend von einem Wake-up-Zustand in einen Ein-Zustand erfolgt. Im Aus-Zustand, im Sleep-Zustand und auch im Wake-up-Zustand kann das Primärantriebsaggregat noch deaktiviert sein.

Der Aus-Zustand zeichnet sich dadurch aus, dass sämtliche Verbraucher elektrischer Energie der Bodenfräsmaschine exklusive der eingangs genannten möglichen Ausnahmen deaktiviert sind. Dazu umfasst die Bodenfräsmaschine einen Bordnetztrennschalter. Dieser trennt in seiner aktivierten Position bzw. in seiner Trennposition ein Bordnetz der Bodenfräsmaschine, über das elektrische Energie von dem Energiespeicher, insbesondere einer Batterie, in das Bordnetz eingespeist wird, von dem Energiespeicher.

Der Sleep-Zustand zeichnet sich dagegen dadurch aus, dass auch hier zwar fast alle elektrischen Verbraucher deaktiviert sind und insbesondere auch die Steuereinheit kein Computerprogramm ausführt. Durch ein Deaktivieren des Bordnetztrennschalters wird jedoch eine stromleitende Verbindung zum Energiespeicher für elektrische Energie hergestellt und die Bodenfräsmaschine vom Aus-Zustand in den Sleep-Zustand versetzt, so dass im Sleep-Zustand auch ohne Betrieb des Primärantriebsaggregates ein oder mehrere elektrische Verbraucher in Betrieb genommen werden können, die im Aus-Zustand noch nicht in Betrieb genommen werden konnten. Umfasst die Bodenfräsmaschine eine Sende- und/oder Empfangseinheit, kann sie beispielsweise bereits im Sleep-Zustand von außerhalb der Bodenfräsmaschine ausgesendete Signale empfangen. Es kann vorgesehen sein, dass im Sleep-Zustand beispielsweise auch eine Beleuchtung der Bodenfräsmaschine wenigstens teilweise aktiviert werden kann, beispielsweise um Wartungsarbeiten an der Bodenfräsmaschine vornehmen zu können. Auch einzelne Aggregate, wie beispielsweise Stellmotoren, können zumindest kurzfristig im Sleep-Zustand betrieben werden, beispielsweise um eine oder mehrere Klappen der Bodenfräsmaschine zu öffnen etc.

Durch ein Aktivieren eines Auslösemittels kann die Bodenfräsmaschine aus dem Sleep-Zustand in den Wake-up-Zustand versetzt werden. Der Wake-up-Zustand bezeichnet einen Übergangszustand, bei dem das Primärantriebsaggregat noch deaktiviert ist, weitere Einzelfunktionen der Bodenfräsmaschine und/oder Betriebseinheiten aber, insbesondere über eine oder mehrere Steuereinheiten, für eine anstehende Inbetriebnahme vorbereitet werden, so dass sie bei einem Übergang in den Ein-Zustand praktisch sofort zur Verfügung stehen. Der Wake-up-Zustand eignet sich insbesondere für solche Einzelfunktionen und/oder Betriebseinheiten, die von einem deaktivierten Zustand aus ein gewisses Zeitintervall benötigen, bis sie nach einer Aktivierung voll funktionsfähig zur Verfügung stehen. Dabei kann es sich beispielsweise um eine oder mehrere Heizungen, beispielsweise Sitzheizungen, handeln, die eine bestimmte Aufheizzeit benötigen, bis überhaupt eine spürbare Heizwirkung eintritt. Ergänzend oder alternativ können dies auch Teile einer Steuereinheit sein, für deren Betrieb das Laden eines oder mehrere Computerprogramme oder ähnlichem erforderlich ist. Im Wake-up-zustand können daher beispielsweise eine oder mehrere Steuereinheiten aktiviert werden, die auch ein oder mehrere Programme ausführen können. Insbesondere kann es sich hierbei um ein oder mehrere im Fahrstand befindliche Elemente zu Bedien- und/oder Anzeigezwecken handeln, wie ganz besonders eine Steuereinheit einer Anzeigeeinrichtung. Die dafür erforderliche Energie wird durch die Speichereinheit für elektrische Energie zur Verfügung gestellt. Durch ein Aktivieren eines Auslösemittels an der Bodenfräsmaschine und/oder durch ein Empfangen eines Auslösesignals durch eine solche Empfangseinheit der Bodenfräsmaschine kann dieser Übergang von dem Sleep-Zustand in den Wake-up-Zustand ausgelöst werden.

Der Ein-Zustand zeichnet sich dagegen dadurch aus, dass die Bodenfräsmaschine nun vollständig einsatzbereit ist, insbesondere auch das Primärantriebsaggregat aktiviert ist und Antriebsenergie erzeugt und für den Betrieb der Bodenfräsmaschine zur Verfügung stellt. Dies kann durch ein Aktivieren eines Auslösemittels, insbesondere eines weiteren bzw. im Vergleich zu dem den Übergang von dem Sleep-Zustand in den Wake-Up-Zustand auslösenden verschiedenen Auslösemittels, erfolgen. Der Ein-Zustand kann beispielsweise durch den Bediener der Bodenfräsmaschine durch ein Starten des Primärantriebsaggregates, durch ein Aktivieren einer Zündschaltung oder ähnliches erreicht werden. Das Starten des Primärantriebsaggregates kann somit insbesondere manuell durch einen im Fahrstand befindlichen Bediener erfolgen. Dadurch, dass im Wake-up-Zustand einzelne Komponenten bereits vorbereitet, ein Computerprogramm für einer Anzeigeeinrichtung beispielsweise bereits geladen und/oder eine Heizung bereits vorgeheizt worden ist, kann der Bediener mit dem Versetzen der Bodenfräsmaschine in den Ein-Zustand umgehend seine Arbeit aufnehmen. Für den Bediener entsteht dann der Eindruck, dass die für ihn praktisch nicht wahrnehmbar im Wake-up-Zustand vorbereiteten Komponenten mit der Einnahme des Ein-Zustandes umgehend und sofort vollumfänglich betriebsbereit sind. Wartezeiten, die dafür bisher erforderlich waren, entfallen somit für den Bediener.

Durch das erfindungsgemäße Verfahren zum Betreiben einer Bodenfräsmaschine wird es auf eine einfache und auch zeitsparende Weise dem Bediener ermöglicht, die Bodenfräsmaschine zügig in Betrieb zu nehmen. Somit kann beispielsweise die Anzeige- und Steuervorrichtung der Bodenfräsmaschine sofort einsatzbereit sein, sobald sich der Bediener der Bodenfräsmaschine in seiner Arbeitsposition in dem Fahrstand oder in der Bedienerkabine befindet und die Bodenfräsmaschine startet, wobei auch beispielsweise die für den Betrieb der Bodenfräsmaschine benötigte oder benötigten Steuereinheiten bzw. von diesen ausgeführte Computerprogramme dann bereits geladen und einsatzbereit sind.

Es wird als besonders bevorzugt angesehen, wenn das Versetzen der Bodenfräsmaschine von dem Aus-Zustand über den Sleep-Zustand in den Wake-up -Zustand stufenweise erfolgt, wobei in einer ersten Stufe, d.h. vom Aus-Zustand in den Sleep-Zustand, eine stromleitende Verbindung zu einem Energiespeicher der Bodenfräsmaschine hergestellt und gegebenenfalls wahlweise rudimentäre Basisfunktionen, wie einzelne oder mehrere Beleuchtungen, insbesondere Lichtquellen, und einzelnen Stellaktoren, beispielsweise zum Verstellen eines oder mehrerer Seitenschilder und/oder eines Abstreiferschildes und/oder einer Fräswalze und/oder von Wartungsklappen, um insbesondere außerhalb der Bodenfräsmaschine Inspektions- und Wartungsarbeiten vornehmen zu können, betrieben werden können. Diese Basisfunktionen sind insbesondere Funktionen, die den Zugang und/oder die Inspektion der Bodenfräsmaschine von außen erleichtern und/oder für Wartungsarbeiten an einer Fräswalze einer Fräseinrichtung hilfreich sind. In einer zweiten Stufe vom Sleep-Zustand in den Wake-up-Zustand wird die Bodenfräsmaschine dagegen auf einen baldigen Fahr- und/oder Fräsbetrieb durch ein Aktivieren von Sekundärfunktionen vorbereitet. Dazu kann beispielsweise ein Laden und/oder Starten eines oder mehrere Computerprogramme, beispielsweise zur Motorsteuerung, zur Steuerung einer oder mehrerer Anzeigeeinrichtungen, insbesondere Anzeigebildschirme, in einer oder mehreren Steuereinheiten und/oder das Aktivieren eines oder mehrerer Heizelemente einer Heizung etc erfolgen. Sekundärfunktionen sind somit solche Funktionen der Bodenfräsmaschine, die erst bei einer vollumfänglichen Inbetriebnahme der Bodenfräsmaschine für den Fahr- und/oder Fräsbetrieb erst zeitlich später relevant werden.

Nachdem die Basisfunktionen aktiviert wurden, kann es vorgesehen sein, dass die in der ersten Stufe aktivierten Aggregate ihre Einsatzbereitschaft an die zentrale Steuervorrichtung melden. Somit kann der Bediener oder eine andere berechtigte Person, die beispielsweise den Betrieb der Bodenfräsmaschine remote über einen in einem Überwachungsraum direkt am Einsatzort oder über einen in einer Steuerzentralle angeordneten Computer über ein Kommunikationsnetzwerk die Daten empfängt, überwacht, im Einzelfall entscheiden, ob er oder die berechtigte Person in einer zweiten Stufe des Verfahrens Sekundärfunktionen, welche die Bodenfräsmaschine in Einsatzbereitschaft versetzten, aktivieren kann bzw. darf oder nicht.

Das Auslösen des Übergangs vom Sleep-Zustand in den Wake-up-Zustand kann auf verschiedene Arten und Weisen ausgelöst werden. Das Auslösemittel selbst kann ein manuell vom Bediener direkt zu betätigendes Element sein, beispielsweise ein Druckschalter oder ähnliches. Das Auslösemittel ist bevorzugt an einer Stelle angeordnet, die der Bediener der Bodenfräsmaschine passieren muss, wenn er vom Boden aus den in den Fahrstand gelangen will, wie beispielsweise entlang eine Aufstiegsleiter, eine Fahrstandtür etc. Hierzu kann auch auf ein Mobilteil zurückgegriffen werden, wobei es bevorzugt ist, wenn das Auslösemittel direkt an der Bodenfräsmaschine angeordnet ist und das Aktivieren des Auslösemittels somit auch direkt an der Bodenfräsmaschine erfolgt. Eine bevorzugte Ausführungsform des erfindungsgemäßen Verfahrens sieht vor, dass das Aktivieren des Auslösemittels ein Aktivieren der wenigstens einen der elektrischen oder elektrisch betätigbaren Komponenten durch eine Betätigung direkt an der Bodenfräsmaschine und insbesondere an einzelnen, von außen erreichbaren Bauteilen der Bodenfräsmaschine und/oder durch eine Betätigung außerhalb der Bodenfräsmaschine, umfasst. Dies kann beispielsweise eine direkte und separate manuelle Betätigung des Bedieners an der Nebenbedieneinheit sein. Es kann aber auch ein indirektes Auslösen des Auslösemittels vorgesehen sein. Hierzu eigenen sich insbesondere Stellen und/oder Betriebssituationen, die üblicherweise passiert und/oder durchlaufen werden, kurz bevor die Bodenfräsmaschine in den Ein-Zustand versetzt werden bzw. das Primärantriebsaggregat gestartet werden soll. Dies kann beispielsweise ein Hochfahren eines Fahrstanddaches, ein Einschalten einer Lichtquelle, das Passieren einer Aufstiegsleiter, das Öffnen einer Fahrstandbegrenzung etc. sein. Somit kann die Bodenfräsmaschine durch einen indirekten Zugriff mittels einer Vielzahl von elektrischen oder elektrisch betätigbaren Komponenten der Maschine von dem Sleep-Zustand in einen wenigstens teilweise eingeschalteten Wake-up-Zustand versetzt werden.

Das Aktivieren des Auslösemittels kann ergänzend oder alternativ somit das Aktivieren wenigstens eines an der Bodenfräsmaschine angebrachten Sensors umfassen, insbesondere wenigstens eines Berührungssensors, eines Bewegungssensors, eines Drucksensors oder eines Kontaktsensors. Eine Vielzahl von Sensoren kann dabei an verschiedenen Stellen und/oder Bauteilen der Bodenfräsmaschine angebracht sein. Es ist von Vorteil, wenn die Sensoren an für den Bediener von außerhalb der Bodenfräsmaschine gut zugänglichen und erreichbaren Stellen, wie beispielsweise an einer oder mehreren Trittstufen, die zu dem Fahrstand oder der Fahrerkabine führen, oder an den benachbarten Haltegriffen, an der Nebenbedieneinheit etc. angebracht werden.

Bei einer Betätigung direkt an der Bodenfräsmaschine ist es besonders vorteilhaft, wenn zuerst die an der Bodenfräsmaschine angebrachten Beleuchtungsquellen, zumindest Außenbeleuchtungsquellen, eingeschaltet bzw. aktiviert werden, so dass die Bodenfräsmaschine ausreichend beleuchtet wird, bevor andere Betätigungsvorgänge an der Bodenfräsmaschine vorgenommen werden. Es ist daher sinnvoll, wenn nach einer Aktivierung des Auslösemittels zumindest ein Teil der Außenbeleuchtung der Bodenfräsmaschine aktiviert wird.

Die an der Bodenfräsmaschine angebrachten Beleuchtungsquellen, welche beispielsweise am Dach des Fahrstandes, an Außenteilen des Korpus der Bodenfräsmaschine oder aber auch am unteren Bereich, im Bereich der Fahreinrichtungen der Bodenfräsmaschine und insbesondere in der Nähe einer Fräswalze angeordnet sein können, so dass der Bediener die Funktionsfähigkeit der einzelnen daran angebrachten Fräsmeißeln überprüfen kann, können bevorzugt durch ein manuelles Einschalten von einer außerhalb der Bodenfräsmaschine befindlichen Person aktiviert werden, wobei das Einschalten wenigstens einer oder mehrerer dieser Lichtquellen die Bodenfräsmaschine in den Wake-up-Zustand versetzen kann. Das Einschalten wenigstens einer dieser Beleuchtungsquellen kann seitens der Bediener manuell, beispielsweise über die Nebenbedieneinheit erfolgen. Es ist aber auch möglich, dass das Einschalten wenigstens einer der Beleuchtungsquellen über das mobile Endgerät des Bedieners durchgeführt wird.

Es können auch ergänzend oder alternativ ein oder mehrere Näherungsschalter mit induktiver oder kapazitiver Technologie an einer geeigneten Stelle als Auslösemittel an der Bodenfräsmaschine vorgesehen sein, um die Bodenfräsmaschine in den Wake-up-Zustand zu versetzen. Hier eignen sich insbesondere solche Stellen, die der in den Fahrstand aufsteigende Bediener passieren muss.

Es können weiterhin auch optoelektronische Sensoren verwendet werden, welche im Vergleich zu den Näherungsschaltern einen deutlich größeren Erfassungsbereich haben, so dass diese Sensoren einen sich nährenden Bediener zuverlässig erkennen können und daraufhin ein Versetzen der Bodenfräsmaschine von dem Sleep-Zustand in den Wake-up-Zustand auslösen können.

Die von dem oder den als Auslösemittel wirkenden Sensoren erfassten Signale können direkt an die zentrale elektronische Steuervorrichtung gesendet werden, welche daraufhin entweder selbst aktiviert und/oder einen Wake-up-Befehl an weitere Komponenten absetzt, beispielsweise an die Anzeige- und Steuervorrichtung im Fahrstand der Bodenfräsmaschine.

Eine bevorzugte Ausführungsform des erfindungsgemäßen Verfahrens zum Betreiben der Bodenfräsmaschine und insbesondere zum Versetzen der Bodenfräsmaschine von dem Sleep-Zustand in den Wake-up-Zustand sieht vor, dass dies durch ein Versetzen, insbesondere ein Aufklappen und/oder Hochfahren, eines Daches des Fahrstandes von einer Transportposition in eine Arbeitsposition, und/oder ein Öffnen einer Tür des Fahrstandes oder aber auch ein Hochfahren der seitlich angeordneten Hubeinrichtung der Bodenfräsmaschine ausgelöst wird.

Weiter ergänzend oder alternativ kann das Aktivieren des Auslösemittels auch daran geknüpft sein, dass ein Öffnen oder Drücken eines in der Bodenfräsmaschine vorgesehenen Ablagefachs und/oder ein Öffnen einer Haube oder einer sich an einer Außenwand der Bodenfräsmaschine befindlichen Klappe, insbesondere einer Wassereinfüllklappe oder einer Kraftstoffeinfüllklappe, ein Betätigen einer Verstelleinheit für die Höhenverstellung von Hubsäulen der Bodenfräsmaschine und/oder ein Öffnen und/oder Schließen einer Wartungshaube der Bodenfräsmaschine und/oder ein Einschalten des Speichers für elektrische Energie, erfolgt, noch bevor der Bediener seine Arbeitsposition im Fahrstand eingenommen hat.

Häufig umfassen Bodenfräsmaschinen der gattungsgemäßen Art eine Aufstiegsleiter, die ein Bediener nutzt, um in den häufig vergleichsweise hoch liegenden Fahrstand zu gelangen. Diese Aufstiegsleiter kann eine oder mehrere Stufen umfassen. Ein Betreten einer dieser Stufen kann ebenfalls eine Aktivierung des Auslösemittels bewirken. Dazu kann es vorgesehen sein, dass einen Drucksensor an die Stufe angebunden ist.

Die obigen Arbeitsvorgänge werden häufig von dem Bediener der Bodenfräsmaschine routinemäßig durchgeführt, bevor die Bodenfräsmaschine ihre Fräsarbeit aufnimmt. Nach dem erfindungsgemäßen Verfahren werden einer oder mehrere dieser vorbereitenden Arbeitsvorgänge dazu genutzt, die Bodenfräsmaschine sozusagen "Aufzuwecken" bevor die vollständige Inbetriebnahme, insbesondere bevor das Primärantriebsaggregat, gestartet wird. Neben dem vorstehend eher sensorbasierten Ansatz können hierzu auch konventionelle mechanische Schalter verwendet werden.

Die vorstehend beschriebenen Maßnahmen können nun den Vorteil mit sich bringen, dass die Zeit, die der Bediener während beispielsweise eines morgendlichen Rundgangs um die Maschinen nutzt und/oder die er für den Aufstieg in den Fahrstand der Bodenfräsmaschine benötigt, bereits im Wake-up-Zustand genutzt wird, die Bodenfräsmaschine bereits auf einen anstehenden Übergang in den Ein-Zustand vorzubereiten. Viele der dafür erforderlichen Funktionen, beispielsweise ein bereits geladenes Computerprogramm einer Anzeigeeinrichtung und/oder ein aktivierter Anzeigebildschirm im Fahrstand, eine entsprechende Beleuchtung, die geladene Maschinensteuerung, stehen ihm dann bereits dann zur Verfügung, wenn der den Fahrstand erreicht. Damit werden für den Bediener an dieser Stelle bisher erforderliche Wartezeiten deutlich verkürzt.

Es kann vorgesehen sein, dass sich der Bediener ergänzend zuerst mittels eines Identifizierungscodes über die Nebenbedieneinheit der Bodenfräsmaschine identifiziert, so dass nur dem Bediener oder einer anderen berechtigten Person ein Zugriff auf die einzelnen elektrischen oder elektrisch betätigbaren Komponenten der Bodenfräsmaschine gewährt wird. Auch diese Identifikation kann als ein Aktivieren eines Auslösemittels genutzt werden.

Die Nebenbedieneinheit der Bodenfräsmaschine kann an einer Seitenwand der Bodenfräsmaschine, in einem dafür vorgesehenen, geeigneten Fach fest angeordnet oder aber auch abnehmbar angebracht werden, so dass der Bediener oder die berechtigte Person erst nach Eingeben eines Identifizierungscodes oder durch beispielsweise einen Fingerabdruck oder eine Gesichtserkennung, eine Berechtigung erhalten kann, das Versetzen der Bodenfräsmaschine von dem Sleep-Zustand in den Wake-up-Zustand durchzuführen.

Wenn die Bodenfräsmaschine erst zu dem Einsatzort transportiert werden muss, erfolgt dies üblicherweise mit geeigneten Transportfahrzeugen. Auf diesen wird die Bodenfräsmaschine typischerweise mit Ladungssicherungsmitteln, beispielsweise gespannten Ketten etc., gesichert. In diesem Zusammenhang ist es im Rahmen der Erfindung auch möglich, dass eine Betätigung zur Aktivierung des Auslösemittels außerhalb der Bodenfräsmaschine eine Betätigung einer Vorrichtung oder Einheit, die in einem für den Transport der Bodenfräsmaschine bis zu dem Einsatzort vorgesehenen Transportfahrzeug oder Anhänger, auf welchem die Bodenfräsmaschine transportiert wird, ist. Dies kann noch während der Transportfahrt bis zu dem Einsatzort, insbesondere kurz vor dem Erreichen des Einsatzortes, oder aber auch erst vor Ort durchgeführt werden. Dafür können das Transportfahrzeug und/oder der Anhänger des Transportfahrzeugs eine Vorrichtung oder eine Einheit, wie ein in einer Fahrerkabine des Transportfahrzeugs oder am Anhänger angeordneter Schalter oder dergleichen, umfassen. Auch ein Abschalten des Primärantriebsaggregates des Transportfahrzeugs kann, sofern dies in geeigneter Weise an die Bodenfräsmaschine übermittelt und von dieser empfangen wird, insbesondere kabellos, zu einer Aktivierung des Auslösemittels führen.

Eine weitere bevorzuge Ausführungsform des erfindungsgemäßen Verfahrens sieht vor, dass eine Betätigung außerhalb der Bodenfräsmaschine und somit eine indirekte Betätigung und ein Einleiten des Vorbereitungsvorgangs, nämlich das "Aufwecken" der Bodenfräsmaschine für den eigentlichen Arbeitsvorgang, mittels einer kabellosen Datenübertragung durchgeführt werden kann. Die oben erwähnte kabellose Datenübertragung kann insbesondere ein WLAN-Zugriff, ein Bluetooth-Zugriff sowie ein Zugriff von einem am Einsatzort der Bodenfräsmaschine befindlichen Server über ein Kommunikationsnetzwerk sein. Der Server kann sogar dazu konfiguriert sein, das Versetzen einer oder mehrerer Bodenfräsmaschinen und/oder auch anderer Baumaschinen von dem Aus- oder Sleep-Zustand in den Wake-up-Zustand sequenziell oder gleichzeitig durchzuführen, und/oder deren Betätigung zu überwachen, wobei die Betätigung gerade in diesem Zusammenhang auch mittels eines tragbaren mobilen Endgeräts, wie eines Mobilfunkgeräts oder eines tragbaren Computers durchgeführt werden kann.

Die Betätigungen direkt an der Bodenfräsmaschine und/oder außerhalb der Bodenfräsmaschine können ein Hochladen eines Steuerprogramms zur Inbetriebsetzung der Bodenfräsmaschine und zum Einschalten der in dem Fahrstand befindlichen Anzeige- und Steuervorrichtung bewirken, bevor das Primärantriebsaggregat oder der Zündungsschlüsselschalter durch den Bediener oder einer weiteren befugten Person überhaupt betätigt wird.

Teil des Wake-up-Zustandes kann insbesondere das Laden wenigstens eines Computerprogramms sein, über das die Anzeigevorrichtung innerhalb des Fahrstandes gesteuert wird. Dies kann beispielsweise ein für den Betrieb eines Anzeigebildschirms erforderliches Computerprogramm sein. Der Bildschirm an sich muss dazu noch nicht eingeschaltet sein. Das Aktivieren/Anschalten des Anzeigebildschirms kann beispielsweise unabhängig und manuell durch den Bediener oder mit dem Starten des Primärantriebsaggregates erfolgen. Dadurch, dass das Computerprogramm im Rahmen des Wake-up-Zustandes bereits geladen worden ist, stehen dem im Fahrstand befindlichen Bediener der Anzeigebildschirm und die darauf angezeigten Informationen umgehend nach dem Einschalten des Anzeigebildschirms zur Verfügung. Beim Aktivieren des Wake-up-Zustandes erfolgt somit bevorzugt wenigstens ein Hochfahren einer Steuereinheit, insbesondere einer Steuereinheit einer Anzeigeeinrichtung, ganz besonders eines Anzeigedisplays.

Es kann vorgesehen sein, dass mit dem Aktivieren des Wake-up-Zustands ein Zeitintervall gestartet wird, nach dessen Ablauf die Bodenfräsmaschine in den Sleep-Zustand rückversetzt wird, sofern nicht innerhalb dieses Zeitintervalls die Bodenfräsmaschine in den Ein-Zustand versetzt wird und/oder das Auslösemittel erneut betätigt wird. Dies kann insbesondere derart weitergebildet werden, dass nach dem Ablauf dieses vorgegebenen Zeitintervalls, innerhalb welchem die Bodenfräsmaschine durch Starten des Primärantriebsaggregats oder Bestromen der Zündschaltung einer Brennkraftmaschine nicht in Betrieb genommen wird, die Anzeige- und Steuervorrichtung automatisch ausgeschaltet wird und die Bodenfräsmaschine selbsttätig zurück von dem Wake-up-Zustand in den Sleep-Zustand versetzt wird. Die zeitliche Dauer des Wake-up-Modus kann dabei individuell von dem Benutzer einstellbar sein. Diese Einstellung kann beispielsweise auch direkt über die Nebenbedieneinheit oder aber auch über das mobile Endgerät des Benutzers durchgeführt werden. Somit muss das Primärantriebsaggregat der Bodenfräsmaschine beispielsweise nicht im Leerlaufmodus laufen, sollten Wartungsarbeiten länger dauern als erwartet.

Das erfindungsgemäße Verfahren eignet sich besonders für Bodenfräsmaschinen vom Typ Straßenfräse, Recycler oder Stabilisierer.

Ein weiterer Aspekt der Erfindung betrifft eine Bodenfräsmaschine, insbesondere eine Straßenfräse, einen Recycler oder einen Stabilisierer, die zur Durchführung des erfindungsgemäßen Verfahrens ausgebildet ist. Hierzu kann es insbesondere vorgesehen sein, dass die Bodenfräsmaschine eine oder mehrere Vorrichtungen zum Versetzen der Bodenfräsmaschine von einem Aus-Zustand in einen Sleep-Zustand, von einem Sleep-Zustand in einen Wake-up-Zustand und von einem Wake-up-Zustand in einen Ein-Zustand aufweist. Hinsichtlich möglicher konstruktiver Weiterbildungen dieser Bodenfräsmaschine wird auf die vorstehenden Ausführungen zum erfindungsgemäßen Verfahren Bezug genommen.

Die Bodenfräsmaschine ist somit insbesondere zur Durchführung des vorstehend erläuterten Verfahrens, bevorzugt auch zur Durchführung einer oder mehrerer bevorzugter Weiterbildungen, ausgebildet. Die Bodenfräsmaschine umfasst idealerweise eine Vorrichtung bzw. ein Auslösemittel, die derart ausgebildet ist, dass durch deren Betätigung/Aktivierung die Bodenfräsmaschine von dem Sleep-Zustand in den Wake-up-Zustand versetzbar ist, und eine Steuereinheit, die in Signalverbindung mit dieser Vorrichtung steht und zur Durchführung des erfindungsgemäßen Verfahrens ausgebildet ist.

Nachstehend wird die Erfindung anhand der in den Zeichnungen dargestellten Ausführungsbeispiele näher erläutert. Es zeigen schematisch:
- Fig. 1: eine Seitenansicht einer Bodenfräsmaschine, welche zum Durchführen des Verfahrens ausgebildet ist;
- Fig. 2: ein schematisches Blockdiagramm, das ein Beispiel eines Steuerungsablaufs für das Versetzen der in Fig. 1 dargestellten Bodenfräsmaschine von einem Aus-/Sleep-Zustand in einen Wake-up-Zustand zeigt; und
- Fig. 3: ein Flussdiagramm, das einzelne Verfahrensschritte näher veranschaulicht.

Gleiche bzw. funktionsgleiche Bauteile sind in den Figuren mit gleichen Bezugszeichen angegeben, wobei sich in den Figuren wiederholende Bauteile nicht in jeder Figur gesondert bezeichnet sind.

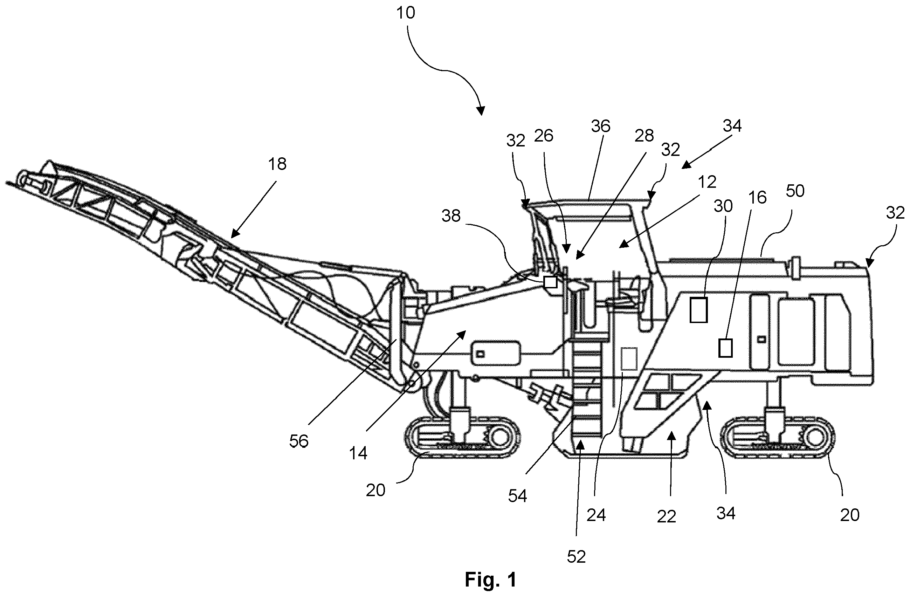

Fig. 1 zeigt beispielhalft eine gattungsgemäße Bodenfräsmaschine 10. Diese Bodenfräsmaschine 10 kann abhängig insbesondere von der verwendeten Fräswalze und unter Umständen Zusatzaggregaten als Straßenfräse, als Recycler oder, dann üblicherweise allerdings ohne eine Fördereinrichtung, vom Grundaufbau auch als Stabilisierer eingesetzt werden. Die Bodenfräsmaschine 10 kann umfassen einen Fahrstand 12, einen die wesentliche Tragstruktur bildenden Maschinenrahmen 14, einen als Primärantriebsaggregat verwendeten Antriebsmotor 16, insbesondere ein Verbrennungsmotor, ein Abwurfband 18 einer Fräsgutfördereinrichtung und vom Antriebsmotor 16 angetriebenen Fahreinrichtungen, hier Kettenlaufwerke 20, wobei auch Räder verwendet werden können. Des Weiteren kann die Bodenfräsmaschine 10 unterhalb des Fahrstandes 12 einen Fräswalzenkasten 22 mit einer darin rotierbar gelagerten, hier nicht dargestellten, Fräswalze aufweisen. Die Fräswalze fräst im Arbeitsbetrieb der Bodenfräsmaschine 10 den Boden mit einer vorgegebener Frästiefe auf, wobei die Fräswalze um eine horizontale und quer zur Arbeitsrichtung verlaufende Rotationsachse rotierbar sein kann. Die Fahreinrichtungen können über Hubeinrichtungen, insbesondere Hubsäulen, mit dem Maschinenrahmen der Bodenfräsmaschine verbunden sein.

Des Weiteren weist die Bodenfräsmaschine 10 eine Speichereinheit für elektrische Energie 24 auf, die über entsprechende Leitungsverbindungen elektrische Energie zu einer Vielzahl von elektrischen oder elektrisch betätigbaren Komponenten der Bodenfräsmaschine 10 leiten kann und zwar unabhängig von dem Antriebsmotor 16 oder davon, dass sich eine Zündschaltung, im Falle, dass als Primärantriebsaggregat eine Brennkraftmaschine verwendet wird, in einer ausgeschalteten Position befindet.

In dem Fahrstand 12 kann ein Hauptbedienpult 26 vorgesehen sein, welches wenigstens eine Anzeige- und Steuervorrichtung 28 sowie, hier nicht dargestellte Bedienelemente, umfasst. Die Anzeige- und Steuervorrichtung 28 kann eine Steuereinheit umfassen, die zur Ausführung und Speicherung eines Computerprogramms ausgebildet ist, insbesondere eines Computerprogramms zur Steuerung der über einen Anzeigebildschirm der Anzeige- und Steuervorrichtung 28 erfolgenden Anzeige. Eine Nebenbedieneinheit 30 kann ebenfalls von der Bodenfräsmaschine umfasst sein, welche außerhalb des Fahrstandes 12 angeordnet ist. Die Nebenbedieneinheit 30 ist in dem in Fig. 1 dargestellten Ausführungsbeispiel an der seitlichen Außenwand der Bodenfräsmaschine 10 angebracht. Die Nebenbedieneinheit 30 kann aber auch an jeder beliebigen Stelle der Bodenfräsmaschine 10 angebracht sein, solange diese für den Bediener der Bodenfräsmaschine leicht zugänglich von außerhalb der Bodenfräsmaschine erreichbar ist. Es wird als vorteilhaft angesehen, wenn die Nebenbedieneinheit 30 eine Abdeckung umfasst, so dass die Nebenbedieneinheit 30 vor Verschmutzungen geschützt werden kann. Über die Nebenbedieneinheit 30 können elektrische oder elektrisch betätigbare Komponenten der Bodenfräsmaschine 10 ein- und ausgeschaltet werden, ohne dass sich der Bediener oder der Benutzer der Bodenfräsmaschine 10 im Fahrstand 12 befindet und auch bevor die Bodenfräsmaschine 10 gestartet wird.

Des Weiteren können an der Fräsmaschine 10 in an sich bekannter Weise Beleuchtungsquellen, wie Arbeitsscheinwerfer 32, vorgesehen sein, welche beispielsweise am Dach 36 des Fahrstandes 12, an Außenteilen des Korpus der Fräsmaschine 10 oder aber auch am unteren Bereich im Bereich der Fahreinrichtungen 20 und/oder des Fräswalzenkasten 22 der Fräsmaschine 10 angebracht sein können, um an diese angrenzende Bereiche der Maschine und/oder der Umgebung auszuleuchten. Es können insbesondere in der Nähe des Fräswalzenkastens 22 weitere Lichtquellen 34 angeordnet sein, so dass der Bediener die Funktionsfähigkeit der einzelnen daran angebrachten Fräsmeißeln zu Wartungszwecken überprüfen kann. Die Beleuchtungsquellen können über die Nebenbedieneinheit 30 durch ein manuelles Einschalten oder aber auch mithilfe einer tragbaren Mobileinrichtung, wie ein mobiles Kommunikationsgerät, insbesondere ein Smartphone, aktivierbar sein.

Die Fräsmaschine 10 kann ferner eine zentrale elektronische Steuervorrichtung 38 aufweisen, welche zur Steuerung der elektrischen oder elektrisch betätigbaren Komponenten der Fräsmaschine 10 oder wenigstens eines Teils davon dient und mit der in dem Hauptbedienpult 26 angeordneten Anzeige- und Steuervorrichtung 28 über einen Kommunikationskanal oder einen Schaltkreis kommunizieren kann.

Das erfindungsgemäße Verfahren sieht vor, die Bodenfräsmaschine von einem völlig ausgeschalteten Zustand, dem Aus-Zustand, durch Deaktivieren eines nicht näher gezeigten und an sich bekannten Bordnetztrennschalter in einen Sleep-Zustand versetzbar ist. Durch das Deaktivieren des Bordnetztrennschalters wird das Bordnetz mit einem elektrischen Energiespeicher der Bodenfräsmaschine elektrische Energie leitend verbunden. Von dem Sleep-Zustand ist die Bodenfräsmaschine in einen einen Wake-up-Zustand versetzbar. Dies erfolgt beispielsweise mithilfe der Betätigung eines entsprechenden Auslösemittels, wie nachstehend noch näher beschrieben. Diese drei Zustände kann die Bodenfräsmaschine einnehmen, auch wenn das Primärantriebsaggregat 16 nicht aktiviert ist, insbesondere ein Verbrennungsmotor nicht läuft, und/oder wenn sich der Zündungsschlüsselschalter in einer ausgeschalteten Position befindet. Vom Wake-up-Zustand kann die Bodenfräsmaschine 10 dann in einen Ein-Zustand versetzt werden, beispielsweise durch eine Aktivierung des Primärantriebsaggregates, eine entsprechende Eingabe am Hauptbedienpult, das Aktivieren einer Zündschaltung oder ähnliches.

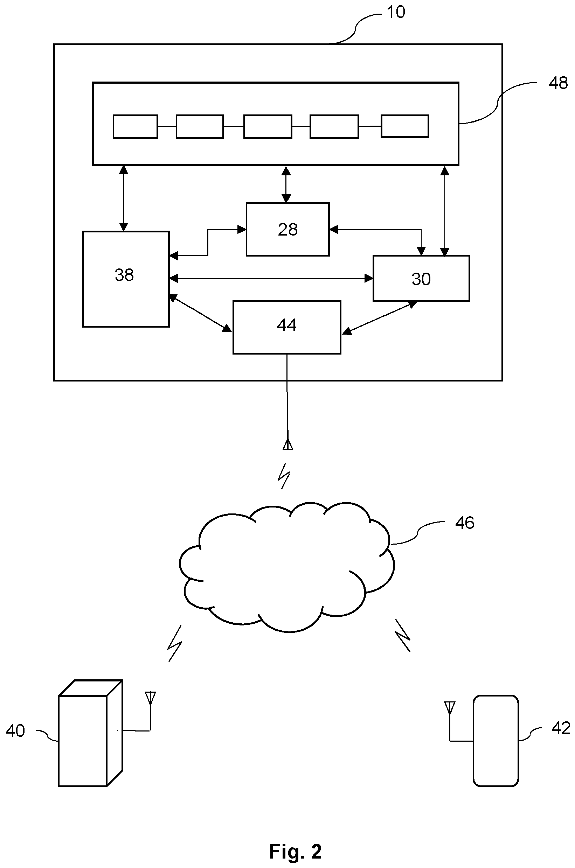

In Fig. 2 ist ein schematisches Blockdiagramm, das ein Beispiel eines Steuerungsablaufs für das Versetzen der in Fig. 1 dargestellten Bodenfräsmaschine 10 von dem Sleep-Zustand in den Wake-up-Zustand näher veranschaulicht.

In dem in Fig. 2 gezeigten Ausführungsbeispiel einer Betätigung außerhalb der Bodenfräsmaschine 10 wird diese Betätigung beispielsweise mittels einer kabellosen Datenübertragung über ein Kommunikationsnetzwerk 46 von einem am Einsatzort der Bodenfräsmaschine 10 oder entfernt von dieser befindlichen Server 40 durchgeführt. Der Server 40 ist dazu konfiguriert, das Versetzen einer oder mehrerer Bodenfräsmaschinen von dem Sleep-Zustand in den Wake-up-Zustand beispielsweise sequenziell oder gleichzeitig durchzuführen. Das Kommunikationsnetzwerk 46 kann ein Wide Area Network (WAN) umfassen. Beispielsweise kann das Weitverkehrsnetz ein Mobilkommunikationsnetz umfassen, das eine Basisstation als ein Endgerät umfasst. Zusätzlich kann das Weitverkehrsnetz zum Beispiel ein Satellitenkommunikationsnetz umfassen. Das Weitverkehrsnetz kann auch das Internet umfassen. Das Kommunikationsnetzwerk kann auch ein drahtgebundenes oder drahtloses lokales Netzwerk (LAN) sein. In diesem Fall stellt somit eine entsprechende Eingabe am Server 40 bzw. das Empfangen dieses Signals an der Bodenfräsmaschine 10 mittels einer geeigneten Empfangseinrichtung ein Auslösemittel dar, welches die Überführung der Bodenfräsmaschine 10 in den Wake-up-Zustand auslöst.

Die Aktivierung dieses Übergangs kann aber auch mittels eines tragbaren mobilen Endgerätes 42, wie ein Smartphone, ein Tablet-Endgerät, ein Laptop-Computer oder dergleichen, auf welchem eine geeignete Software installiert ist, durchgeführt werden. Der Zugriff mit dem tragbaren mobilen Endgerät oder dem Tablet kann beispielsweise über WLAN oder Bluetooth erfolgen.

Der Server 40 und das mobile Endgerät 42 können über das Kommunikationsnetzwerk 46 mit einem Kommunikationsterminal 44 der Bodenfräsmaschine 10 kommunizieren und Steuerungssignale zum Steuern der Bodenfräsmaschine 10 senden sowie Signale von der Bodenfräsmaschine 10 empfangen. Der Kommunikationsterminal 44 ist ein Endgerät, welches an der Bodenfräsmaschine 10 an einer geeigneten Stelle montiert ist, beispielsweise am Hauptbedienerpult 26 oder an der Nebenbedieneinheit 30 und zur Fernverwaltung der Bodenfräsmaschine und speziell, im Falle des Ausführungsbeispiels gemäß Fig. 1, zur Fernverwaltung der Bodenfräsmaschine 10 geeignet ist.

Der Kommunikationsterminal 44 steht mit der zentralen elektronischen Steuervorrichtung 38 in einer Kommunikationsverbindung und ist dabei geeignet, eine Kommunikation über den Server 40 und das Kommunikationsnetzwerk 46 durchzuführen. Der Kommunikationsterminal 44 dient dazu, Daten zwischen dem Server 40 und der zentralen elektronischen Steuervorrichtung 38 der Bodenfräsmaschine 10 zu senden und zu empfangen. Die zentrale elektronische Steuervorrichtung 38 steuert den Gesamtbetrieb der Bodenfräsmaschine 10, wobei die zentrale elektronische Steuervorrichtung 38 einen internen Speicher aufweist, in welchem die für den Betrieb der Bodenfräsmaschine 10 notwendigen Programme gespeichert sind.

Ergänzend oder alternativ kann das Auslösemittel, mit dem der Bodenfräsmaschine der gewünschte Übergang in den Wake-up-Zustand signalisiert wird, auch physisch direkt an der Bodenfräsmaschine 10 erfolgen. Das Auslösemittel ist dazu an der Bodenfräsmaschine 10 angeordnet. Dazu kann es beispielsweise vorgesehen sein, dass das Öffnen einer Haube 50 oder einer sich an einer Außenwand der Bodenfräsmaschine 10 befindlichen Klappe, insbesondere einer Wassereinfüllklappe oder einer Kraftstoffeinfüllklappe mittels eines geeigneten Sensors erfasst wird und damit den Übergang in den Wake-up-Zustand auslöst. Das Öffnen kann durch wenigstens einen Kontaktsensor oder einen Drucksensor erfasst werden. Des Weiteren kann ergänzend oder alternativ ein Einschalten des Speichers für elektrische Energie 30 erfasst werden und ein Aktivierungssignal an die zentrale elektronische Steuervorrichtung 38 gesendet werden, welche dann den Wake-up-Zustand einleitet.

In einer weiteren Alternative können auf einer oder mehreren Stufen 54 einer Fahrstandleiter 52 Drucksensoren angebracht werden, so dass beim Betreten einer Stufe 54 der Fahrstandleiter 52 ein Aktivierungssignal für einen Wechsel in den Wake-up-Modus initiiert wird. Das Auslösemittel ist dann in diesem Fall der durch die betretene Trittstufe betätigte Drucksensor. Ein solches Aktivierungssignal kann aber auch durch Betätigen einer Verstelleinheit für die Höhenverstellung von seitlich angeordneten Hubsäulen 56 der Bodenfräsmaschine 10 und/oder durch Öffnen oder Schließen einer Wartungshaube der Bodenfräsmaschine 10 initiiert werden.

Besonders eignet sich auch eine manuelle Betätigung eines, insbesondere mechanischen, Betätigungselementes an der Nebenbedieneinheit 30, um den Übergang aus dem Sleep-Zustand in den Wake-up-Zustand auszulösen.

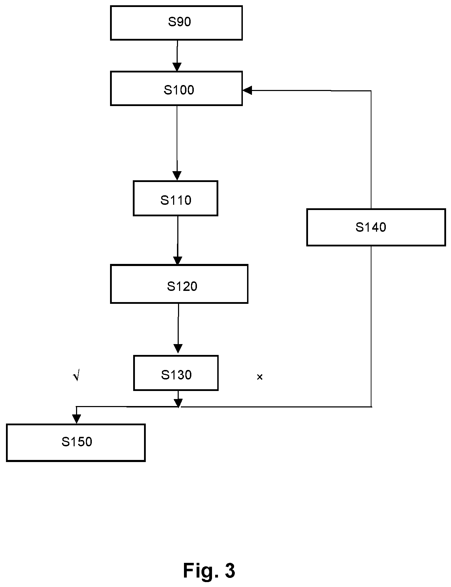

Fig. 3 zeigt ein Flussdiagramm des erfindungsgemäßen Verfahrens. In dem Schritt S100 befindet sich die Bodenfräsmaschine in dem Sleep-Zustand. Hierzu vorgelagert wurde die Bodenfräsmaschine von dem Aus-Zustand im Schritt S90 in den Sleep-Zustand gemäß S100 versetzt, insbesondere durch Deaktivieren eines Bordnetztrennschalters und damit durch ein Herstellen einer stromleitenden Verbindung zwischen dem Bordnetz und der Batterie der Bodenfräsmaschine. In einem weiteren Schritt S110 wird ein Auslösemittel betätigt bzw. aktiviert, beispielsweise wie vorstehend beschrieben, wodurch die Bodenfräsmaschine im Schritt S120 in den Wake-up-Zustand versetzt wird. Dies kann eine Timerfunktion im Schritt S130 in Gang setzen bzw. ein Zeitintervall starten.

Erfolgt innerhalb dieses Zeitintervalls kein Übergang in den Ein-Zustand und/oder eine erneute Betätigung eines Auslösemittels gemäß Schritt S110, kehrt die Bodenfräsmaschine im Schritt 140 wieder in den Sleep-Zustand zurück. Initiiert der Bediener dagegen den Ein-Zustand im Schritt S150, beispielsweise durch ein Starten eines Primärantriebsaggregates, erfolgt ein Übergang von dem Wake-up-Zustand in den Ein-Zustand und es erfolgt kein selbsttätige Rückkehr zum Sleep-Zustand.

Der Schritt S120 kann insbesondere ein Laden eines Computerprogramms, insbesondere zur Steuerung eines Anzeigedisplays innerhalb des Fahrstandes der Bodenfräsmaschine, umfassen, wobei das tatsächlich Display an sich dabei noch deaktiviert sein kann und dementsprechend auch noch keine Anzeige darauf erfolgt. Allerdings werden im Hintergrund und für den Bediener nicht merkbar alle Vorbereitungen dazu getroffen, so dass dann, wenn der Bediener das Display selbst einschaltet, die von dem Computerprogramm gesteuerte Anzeige sofort verfügbar ist.

## Patentansprüche

1. Verfahren zum Betreiben einer Bodenfräsmaschine (10),
wobei die Bodenfräsmaschine (10) einen Fahrstand (12), ein Primärantriebsaggregat (16), eine Speichereinheit für elektrische Energie (24), welche unabhängig von dem Primärantriebsaggregat (16) elektrische Energie für wenigstens eine aus einer Vielzahl von elektrischen oder elektrisch betätigbaren Komponenten der Bodenfräsmaschine (10) zur Verfügung stellen kann, ein Hauptbedienpult (26) mit wenigstens einer Anzeige- und Steuervorrichtung (28) zur Eingabe von Steuerbefehlen für die Steuerung der Bodenfräsmaschine (10),
- wobei die Bodenfräsmaschine (10) eine außerhalb des Fahrstandes (12) angeordnete Nebenbedieneinheit (30) aufweist, über welche wenigstens eine der elektrischen oder elektrisch betätigbaren Komponenten betätigbar ist,
- wobei die Bodenfräsmaschine (10) eine zentrale elektronische Steuervorrichtung (38) zur Steuerung der elektrischen oder elektrisch betätigbaren Komponenten aufweist, und
- wobei das Verfahren ein Versetzen der Bodenfräsmaschine (10)
o von einem Aus-Zustand in einen Sleep-Zustand durch ein Deaktivieren eines Bordnetztrennschalters, wodurch eine stromleitende Verbindung zum Energiespeicher für elektrische Energie hergestellt wird,
∘ anschließend von einem Sleep-Zustand in einen Wake-up-Zustand durch ein Aktivieren eines Auslösemittels; und
∘ von einem Wake-up-Zustand in einen Ein-Zustand
umfasst.

2. Verfahren zum Betreiben einer Bodenfräsmaschine (10) nach Anspruch 1,
**dadurch gekennzeichnet,**
**dass** das Aktivieren eines Auslösemittels ein Aktivieren der wenigstens einen der elektrischen oder elektrisch betätigbaren Komponenten durch eine Betätigung direkt an der Bodenfräsmaschine (10) und insbesondere an einzelnen, von außerhalb der Bodenfräsmaschine erreichbaren Bauteilen der Bodenfräsmaschine (10) und/oder eine Betätigung von außerhalb der Bodenfräsmaschine (10) umfasst.

3. Verfahren zum Betreiben einer Bodenfräsmaschine (10) nach einem der vorhergehenden Ansprüche,
**dadurch gekennzeichnet,**
**dass** das Aktivieren eines Auslösemittels direkt an der Bodenfräsmaschine (10) das Aktivieren wenigstens eines an der Bodenfräsmaschine (10) angebrachten Sensors, insbesondere wenigstens eines Bewegungssensors, eines Berührungssensors, eines Drucksensors oder eines Kontaktsensors ist.

4. Verfahren zum Betreiben einer Bodenfräsmaschine (10) nach einem der vorhergehenden Ansprüche,
**dadurch gekennzeichnet,**
**dass** ein Aktivieren eines Auslösemittels direkt an der Bodenfräsmaschine (10) folgendes umfasst:
a) Einschalten wenigstens einer an der Bodenfräsmaschine (10) angebrachten Beleuchtungsquelle (32); und/oder
b) Versetzen des Fahrstandes (12) der Bodenfräsmaschine (10) von einer Transportposition in eine Arbeitsposition und/oder Anfassen einer der Standsäulen des Fahrstandes (12) oder Öffnen einer Tür des Fahrstandes; und/oder
c) Öffnen eines in der Bodenfräsmaschine (10) vorgesehenen Ablagefachs; und/oder
d) Öffnen einer Haube (50) oder einer sich an einer Außenwand der Bodenfräsmaschine (10) befindlichen Klappe, insbesondere einer Wassereinfüllklappe oder einer Kraftstoffeinfüllklappe; und/oder
e) Einschalten des Speichers für elektrische Energie (30); und/oder
f) Betreten einer Stufe (54) einer Fahrstandleiter (52) oder einer Fahrerkabinenleiter; und/oder
g) Betätigen einer Verstelleinheit für die Höhenverstellung von seitlich angeordneten Hubsäulen (56) der Bodenfräsmaschine; und/oder
h) Öffnen und/oder Schließen einer Wartungshaube der Bodenfräsmaschine (10).

5. Verfahren zum Betreiben einer Bodenfräsmaschine (10) nach einem der vorhergehenden Ansprüche,
**dadurch gekennzeichnet,**
**dass** das Versetzen der Bodenfräsmaschine (10) von dem Sleep-Zustand in den Wake-up-Zustand durch das Eingeben eines Identifizierungscodes seitens eines Bedieners über die Nebenbedieneinheit (30) der Bodenfräsmaschine (10) erfolgt, so dass dem Bediener einen Zugriff auf die einzelnen elektrischen oder elektrisch betätigbaren Komponenten der Bodenfräsmaschine (10) gewährt wird.

6. Verfahren zum Betreiben einer Bodenfräsmaschine (10) nach einem der vorhergehenden Ansprüche,
**dadurch gekennzeichnet,**
**dass** ein Aktivieren eines Auslösemittels von außerhalb der Bodenfräsmaschine (10) eine Betätigung einer Vorrichtung oder Einheit, die in einem für den Transport der Bodenfräsmaschine (10) bis zu dem Einsatzort vorgesehenen Transportfahrzeug oder Anhänger, auf welchem die Bodenfräsmaschine (10) transportiert wird, vorgesehen ist, umfasst.

7. Verfahren zum Betreiben einer Bodenfräsmaschine (10) nach Anspruch 6,
**dadurch gekennzeichnet,**
**dass** die Betätigung der Vorrichtung oder der Einheit des Transportfahrzeugs oder des Anhängers des Transportfahrzeugs das Betätigen eines in der Fahrerkabine des Transportfahrzeugs angeordneten Schalters, eines am Anhänger vorgesehenen Schalters und/oder ein Abschalten des Primärantriebsaggregates des Transportfahrzeugs und dergleichen umfasst.

8. Verfahren zum Betreiben einer Bodenfräsmaschine (10) nach einem der Ansprüche 1 oder 2, **dadurch gekennzeichnet,**
**dass** ein Aktivieren eines Auslösemittels von außerhalb der Bodenfräsmaschine (10) mittels einer kabellosen Datenübertragung, insbesondere eines WLAN-Zugriffs, eines Bluetooth-Zugriffs, eines Zugriffs von einem am Einsatzort der Bodenfräsmaschine (10) befindlichen Server (40), welcher dazu konfiguriert ist, das Versetzen einer oder mehrerer Bodenfräsmaschinen (10) von einem Aus-Zustand oder einem Sleep-Zustand in einen Wake-up-Zustand sequenziell oder gleichzeitig durchzuführen, und/oder deren Betätigung zu überwachen, umfasst, wobei die Betätigung mittels eines tragbaren mobilen Endgeräts (42) durchgeführt wird.

9. Verfahren zum Betreiben einer Bodenfräsmaschine (10) nach einem der vorhergehenden Ansprüche,
**dadurch gekennzeichnet,**
**dass** ein Aktivieren eines Auslösemittels an und/oder außerhalb der Bodenfräsmaschine (10) ein Hochladen eines Steuerprogramms zur Inbetriebsetzung der Bodenfräsmaschine (10) und zum Einschalten der in dem Fahrstand (12) befindlichen Anzeige- und Steuervorrichtung (28) bewirken, bevor das Primärantriebsaggregat (16) gestartet und/oder eine Zündschaltung bestromt wird.

10. Verfahren zum Betreiben einer Bodenfräsmaschine (10) nach Anspruch 9,
**dadurch gekennzeichnet,**
**dass** durch das Aktivieren des Wake-up-Zustands wenigstens ein Hochfahren einer Steuereinheit insbesondere einer Steuereinheit eines Anzeigedisplays, umfasst.

11. Verfahren zum Betreiben einer Bodenfräsmaschine (10) nach einem der vorhergehenden Ansprüche,
**dadurch gekennzeichnet,**
**dass** mit dem Aktivieren des Wake-up-Zustands ein Zeitintervall gestartet wird, nach dessen Ablauf die Bodenfräsmaschine selbsttätig wieder in den Sleep-Zustand versetzt wird, sofern nicht innerhalb dieses Zeitintervalls die Bodenfräsmaschine aus dem Wake-up-Zustand in den Ein-Zustand versetzt wird und/oder das Auslösemittel erneut betätigt wird.

12. Verfahren zum Betreiben einer Bodenfräsmaschine (10) nach einem der vorhergehenden Ansprüche,
**dadurch gekennzeichnet,**
**dass** nach Ablauf eines vorgegebenen Zeitintervalls, innerhalb welchem die Bodenfräsmaschine (10) durch Starten des Primärantriebsaggregats (16) oder Bestromen der Zündschaltung einer Brennkraftmaschine nicht in Betrieb genommen wird, die Anzeige- und Steuervorrichtung (28) automatisch ausgeschaltet wird und die Bodenfräsmaschine (10) zurück von dem Wake-up-Zustand in den Sleep-Zustand oder den Aus-Zustand versetzt wird.

13. Verfahren zum Betreiben einer Bodenfräsmaschine (10) nach einem der vorhergehenden Ansprüche,
**dadurch gekennzeichnet,**
**dass** sie eine Straßenfräse, ein Recycler oder ein Stabilisierer ist.

14. Bodenfräsmaschine (10), insbesondere Straßenfräse, Recycler oder Stabilisierer, die zum Durchführen des Verfahrens nach einem der Ansprüche 1 bis 13, ausgebildet ist
**dadurch gekennzeichnet,**
**dass** sie
- eine Vorrichtung umfasst, die derart ausgebildet ist, dass durch deren Betätigung die Bodenfräsmaschine (10) von einem Aus-Zustand in einen Sleep-Zustand versetzt wird,
- eine Vorrichtung umfasst, die derart ausgebildet ist, dass durch deren Betätigung die Bodenfräsmaschine (10) von dem Sleep-Zustand in einen Wake-up-Zustand versetzt wird, und
- eine Vorrichtung umfasst, die derart ausgebildet ist, dass durch deren Betätigung die Bodenfräsmaschine (10) von dem Wake-up-Zustand in einen Ein-Zustand versetzt wird.
